# EUROPÄISCHE PATENTSCHRIFT

(11) **EP 1 141 585 B1**
(45) Veröffentlichungstag und Bekanntmachung des Hinweises auf die Patenterteilung: **13.08.2003**
(21) Anmeldenummer: 99962254.1
(22) Anmeldetag: 13.12.1999
(51) Int. Cl.: F16H 37/08

(54) **STUFENLOS VERSTELLBARES FAHRZEUGGETRIEBE**
CONTINUOUSLY VARIABLE TRANSMISSION FOR A MOTOR VEHICLE
BOITE DE VITESSES VARIABLE EN CONTINU POUR VEHICULE

(30) Priorität: 18.12.1998 DE 19858553
(43) Veröffentlichungstag der Anmeldung: 10.10.2001
(73) Patentinhaber: ZF FRIEDRICHSHAFEN Aktiengesellschaft, 88038 Friedrichshafen (DE)
(72) Erfinder: GUMPOLTSBERGER, Gerhard, D-88045 Friedrichshafen (DE)
(86) Internationale Anmeldenummer: EP9909858
(87) Internationale Veröffentlichungsnummer: WO00037829

(56) Entgegenhaltungen:
- EP-A- 0 105 515
- EP-A- 0 177 241
- WO-A-98/34051
- GB-A- 2 115 091
- US-A- 4 885 955
- US-A- 5 453 061

## Beschreibung

Die Erfindung betrifft ein stufenlos verstellbares Fahrzeuggetriebe mit einem Variator mit kraftschlüssiger, inbesondere mit reibschlüssiger Leistungsübertragung, beispielsweise einem Reibradgetriebe mit paarweise zusammenwirkenden toroidförmigen Laufflächen, zwischen denen Rollkörper laufen oder einem Kegelscheibenumschlingungsgetriebe und zwei Planetengetrieben mit mindestens zwei Kupplungen zum Schalten der Planetengetriebe. Die Getriebeeingangsleistung ist in wenigstens zwei Leistungsbereiche aufteilbar und sowohl im ersten als auch im zweiten Leistungsbereich leistungsverzweigt, wobei die Leistung in einem Leistungsbereich über einen ersten Leistungszweig von einem Getriebeeingang über den Variator sowie das erste Planetengetriebe zu einem Getriebeausgang und über einen zweiten Leistungszweig von dem Getriebeeingang über einen mechanischen zweig an dem Variator vorbei zu dem ersten Planetengetriebe und dem Getriebeausgang übertragbar ist.

Ein derartiges Reibradgetriebe ist in der US-A-5,453,061 gezeigt. Das Rückwärtsfahren wird nach diesem Stand der Technik dadurch ermöglicht, daß ein Leistungsverzweigungsbereich eine Geared-Neutral-Position enthält, an deren beiden Seiten Vorwärts- und Rückwärtsfahren möglich ist.

Aus der WO 98/34051 der Anmelderin ist ein ähnliches Getriebe bekannt. Aufgabe dieser Erfindung war es, ein Getriebe, das in zwei Leistungsbereichen betrieben wird hinsichtlich des erzielbaren Gesamtwirkungsgrades zu verbessern und darüber hinaus das Getriebe bei prinzipiell gleichem Grundaufbau an unterschiedliche Einbauverhältnisse anpassen zu können. Dabei wird in dem zweiten Leistungsbereich die Getriebeeingangsleistung unter Leistungsverzweigung in dem Getriebe auf die Abtriebswelle übertragen.

Bei einem vorgenannten stufenlos verstellbaren Fahrzeuggetriebe, wie es aus dem Stand der Technik bekannt ist, ist eine Reduzierung des Drehmoments im Variator nur in einem Leistungsbereich vorgeschlagen. Leistungsverzweigte Getriebe an sich sind ferner aus dem Bereich der hydrostatischen Getriebe bekannt, welche mit Nachteil eine starke Geräuschentwicklung bei einem schlechten Wirkungsgrad sowie hohen Herstellkosten aufweisen.

Aufgabe der vorliegenden Erfindung ist es, ein stufenlos verstellbares Fahrzeuggetriebe anzugeben, welches die obengenannten Nachteile vermeidet und insbesondere eine Weiterbildung der Rückwärtsfahrtmöglichkeit aufzeigt.

Erfindungsgemäß wird diese Aufgabe bei einem gattungsgemäßen Fahrzeuggetriebe dadurch gelöst, daß eine Bremse parallel zu den beiden Kupplungen geschaltet ist. Somit wird vorteilhafterweise ein Rückwärtsgang ohne Leistungsverzweigung ermöglicht.

Die mindestens zwei Kupplungen zum Schalten der zwei Planetengetriebe sind, je nach Verwendungszweck des Getriebes bzw. Einbaumöglichkeiten, vorteilhafterweise an unterschiedlichen Stellen des Getriebes angeordnet.

In einer besonderen Weiterbildung der Erfindung wird vorgeschlagen, ein zweites Planetengetriebe zur Leistungsverzweigung in beiden Leistungsbereichen vorzusehen und die zwei Leistungsanteile, welche über den ersten und zweiten Leistungszweig geführt werden, anschließend in dem ersten oder dem zweiten Planetengetriebe wieder aufzusummieren. Damit wird vorteilhafterweise ein einfaches und kostengünstiges Mittel zur Realisierung der Leistungsverzweigung in beiden Leistungsbereichen des vorgenannten Fahrzeuggetriebes angegeben.

Vorteilhafterweise wird wenigstens eines der beiden Planetengetriebe im Leistungsfluß zwischen dem Getriebeeingang und dem Getriebeausgang parallel zum Variator angeordnet oder auch dem Variator nachgeordnet.

In einer Weiterbildung sind die beiden Planetengetriebe in dem Leistungsfluß zwischen Getriebeeingang und Getriebeausgang parallel zueinander angeordnet.

Vorteilhafterweise sind das erste und das zweite Planetengetriebe derart angeordnet, daß im ersten Leistungsbereich der Variator mit dem Sonnenrad des ersten Planetengetriebes, der Getriebeeingang mit dem Planetenträger und der Getriebeausgang mit dem Hohlrad des ersten Planetengetriebes verbunden sind.

Ferner sind das erste und das zweite Planetengetriebe derart angeordnet, daß im zweiten Leistungsbereich der Variator mit dem Hohlrad des zweiten Planetengetriebes, der Getriebeeingang mit der Sonne und der Getriebeausgang mit dem Steg des zweiten Planetengetriebes verbunden sind.

Die beiden Kupplungen sind derart schaltbar, daß vorteilhafterweise jeweils ein Planetengetriebe mit Leistung beaufschlagbar ist und das andere Planetengetriebe ohne Leistungsübernahme leer mitdreht.

In einer Weiterbildung sind die beiden Kupplungen im mechanischen Leistungszweig parallel zum Variator angeordnet.

In einer anderen Weiterbildung wird vorgeschlagen, daß die beiden Kupplungen im Leistungszweig des Variators vorgesehen und diesem nachgeordnet sind. Dadurch werden vorteilhafterweise beide Kupplungen mit einem geringen Moment beaufschlagt.

In einer besonderen Weiterbildung der Erfindung wird im ersten Leistungsbereich das Fahrzeug aus einer Geared-Neutral-Position des Getriebes vorwärts angefahren. Für ein Anfahren mit Geared-Neutral ist prinzipiell kein weiteres Anfahrelement mit einer Schlupfregelung, z. B. ein Wandler oder eine Reibkupplung erforderlich.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind.

### Es zeigen:

- Fig. 1: eine Prinzipdarstellung der Leistungsverzweigung in einem stufenlos verstellbaren Getriebe;
- Fig. 5: das erfindungsgemäße stufenlos verstellbare Getriebe mit einem Variator und zwei Planetengetrieben in Prinzipdarstellung und
- Fig. 6: ein stufenlos verstellbares Getriebe mit Leistungsverzweigung für eine Front-Quer-Anordnung in einem Kraftfahrzeug in schematischer Darstellung.

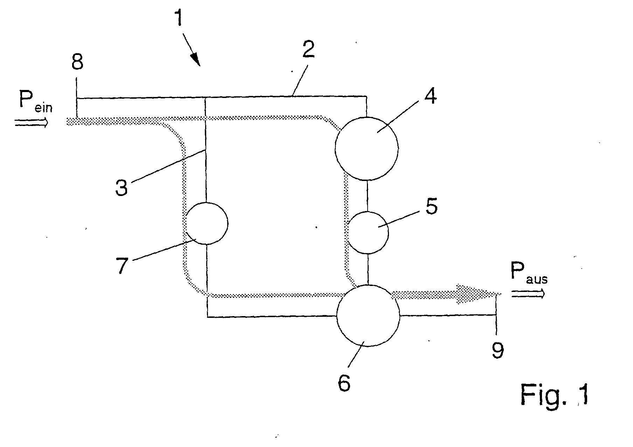

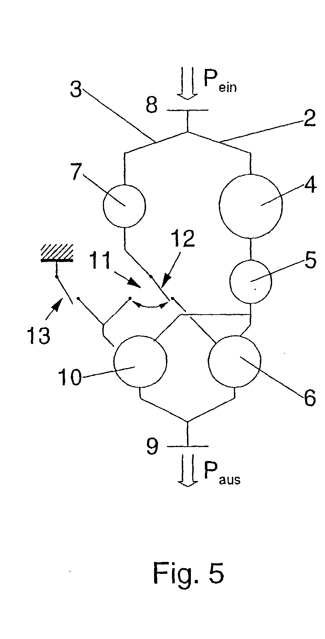

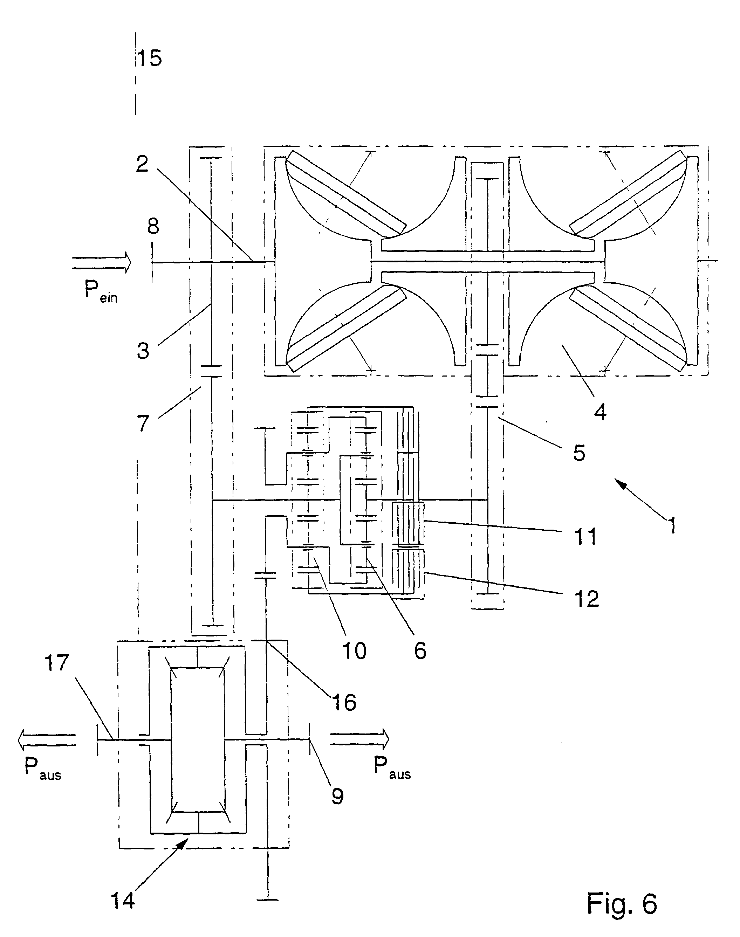

Die Leistungsverzweigung (Fig. 1) in einem stufenlos verstellbaren Fahrzeuggetriebe 1, wie es aus dem Stand der Technik bekannt ist, erfolgt folgendermaßen:
Eine von einer nicht dargestellten Kraftmaschine gelieferte Leistung wird als Getriebeeingangsleistung P_ein am Getriebeeingang 8 zur Verfügung gestellt. In dem Getriebe 1 ist in einem ersten Leistungszweig 2 ein Variator 4 mit einer nachgeschalteten Übersetzungsstufe 5 sowie einem ersten Planetengetriebe 6 angeordnet. Parallel zu dem ersten Leistungszweig 2 ist ein zweiter Leistungszweig 3 vorgesehen, welcher eine Übersetzungsstufe 7 aufweist. Dabei wird ein Teil der am Getriebeeingang 8 vorhandenen Gesamtleistung durch den Variator 4 geführt, der andere Teil wird am Variator 4 vorbei über den mechanischen Leistungszweig 3 geleitet. Beide Anteile werden anschließend in dem ersten Planetengetriebe 6 wieder aufsummiert und als Ausgangsleistung P_aus an dem Getriebeausgang 9 bereitgestellt. Die Leistungsaufteilung erfolgt dabei definiert, d. h. je nach Gesamtübersetzungsverhältnis ergeben sich die Leistungsanteile im Variator 4 und in dem mechanischen Zweig 3.

In der nachfolgenden Fig. 5 ist ein stufenlos verstellbares Fahrzeuggetriebe mit einem Variator 4 und zwei Planetengetrieben 6 und 10 gemäß der Erfindung dargestellt, dabei werden die aus der Fig. 1 wiederkehrenden Bauteile der Einfachheit halber mit den selben Kennzahlen bezeichnet.

In der Ausbildung gemäß Fig. 5 sind die erste und die zweite Kupplung 11, 12 in dem zweiten Leistungszweig 3 zwischen der Übersetzungsstufe 7 und den beiden Planetengetrieben 6 und 10 angeordnet. Wenn beispielsweise, wie dargestellt, die zweite Kupplung 12 geschlossen ist, so erfolgt die Leistungsverzweigung über die beiden Leistungszweige 2 und 3, wobei die beiden Leistungsanteile in dem ersten Planetengetriebe 6 wieder aufsummiert werden, während das zweite Planetengetriebe 10 über die geöffnete erste Kupplung 11 nicht geschlossen ist und leer mitläuft. Bei einer derartigen Anordnung der Kupplungen 11 und 12 sind diese vorteilhafterweise mit einem nur niedrigen Drehmoment beaufschlagt, da der über den Variator 4 geführte Leistungsanteil deutlich reduziert ist, gegenüber einem Leistungsanteil, welcher über den Variator ohne Leistungsverzweigung geführt würde.

Parallel zu den beiden Kupplungen 11 und 12 ist eine Bremse 13 für den Rückwärtsfahrbereich des Getriebes vorgesehen. Ein Anfahren in Vorwärtsrichtung erfolgt beispielsweise über eine geschlossene erste Kupplung 11 oder auch mit Geared-Neutral. Zum Anfahren in Rückwärtsfahrtrichtung wird die Bremse 13 geschlossen und die beiden Kupplungen 11 und 12 geöffnet, so daß am Getriebeausgang 9 ein Drehmoment mit umgekehrter Drehrichtung bereitgestellt wird.

Für eine Front-Quer-Anordnung (Fig. 6) des erfindungsgemäßen Getriebes in einem Kraftfahrzeug sind der Variator 4, die Planetengetriebe 6 und 10 sowie ein Differential 14 derart hintereinander angeordnet, so daß ihre Hauptachsen jeweils parallel zueinander und quer zur Fahrzeuglängsachse 15 verlaufen. Hinter dem Getriebeeingang 8 erfolgt eine Leistungsverzweigung über den ersten Leistungszweig 2 zu dem Variator 4 sowie über den zweiten Leistungszweig 3 und eine Übersetzungsstufe 7 zu den Planetengetrieben 6 und 10. Dem Variator 4 wiederum ist eine mechanische Übersetzungsstufe 5 nachgeordnet, welche über die Kupplungen 11 und 12 mit den Planetengetrieben 6 und 10 verbunden sind. Vom Getriebeausgang 9 wird die Getriebeausgangsleistung P_aus über das Differential 14 auf die beiden Antriebswellen 16 und 17 verteilt.

## Patentansprüche

1. Stufenlos verstellbares Fahrzeuggetriebe (1) mit einem Variator (4) mit kraftschlüssiger, insbesondere mit reibschlüssiger Leistungsübertragung, beispielsweise einem Reibradgetriebe oder einem Kegelscheibenumschlingungsgetriebe,
und zwei Planetengetrieben (6, 10) mit mindestens zwei Kupplungen (11, 12) zum Schalten der zwei Planetengetriebe (6, 10), wobei die Getriebeeingangsleistung (P_ein) in wenigstens zwei Leistungsbereiche aufteilbar und sowohl im ersten als auch im zweiten Leistungsbereich leistungsverzweigt ist
und die Getriebeeingangsleistung in einem Leistungsbereich über einen ersten Leistungszweig (2) von einem Getriebeeingang (8) über den Variator (4) sowie das erste Planetengetriebe (6) zu einem Getriebeausgang (9) und über einen zweiten Leistungszweig (3) von dem Getriebeeingang (8) über einen mechanischen Zweig an dem Variator (4) vorbei zu dem ersten Planetengetriebe (6) und dem Getriebeausgang (9) übertragbar ist,
**dadurch gekennzeichnet, daß** eine Bremse (13) parallel zu den beiden Kupplungen (11, 12) zum Schalten eines Rückwärtsgangs vorgesehen ist.

2. Stufenlos verstellbares Fahrzeuggetriebe nach Anspruch 1, **dadurch gekennzeichnet, daß** das zweite Planetengetriebe (10) zur Leistungsverzweigung in beiden Leistungsbereichen vorgesehen ist und die zwei Leistungsanteile in dem ersten oder dem zweiten Planetengetriebe (6, 10) wieder aufsummiert werden.

3. Stufenlos verstellbares Fahrzeuggetriebe nach Anspruch 1 oder 2, **dadurch gekennzeichnet, daß** wenigstens ein Planetengetriebe (6, 10) im Leistungsfluß zwischen Getriebeeingang (8) und Getriebeausgang (9) parallel zum Variator (4) angeordnet oder dem Variator (4) nachgeordnet ist.

4. Stufenlos verstellbares Fahrzeuggetriebe nach den Ansprüchen 1, 2 oder 3, **dadurch gekennzeichnet , daß** die beiden Planetengetriebe (6, 10) im Leistungsfluß parallel zueinander angeordnet sind.

5. Stufenlos verstellbares Fahrzeuggetriebe nach den Ansprüchen 1, 2, 3 oder 4, **dadurch gekennzeichnet , daß** das erste und das zweite Planetengetriebe (6, 10) derart angeordnet sind, daß im ersten Leistungsbereich der Variator (4) mit dem Sonnenrad, der Getriebeeingang (8) mit dem Planetenträger und der Getriebeausgang (9) mit dem Hohlrad des ersten Planetengetriebes (6) verbunden sind.

6. Stufenlos verstellbares Fahrzeuggetriebe nach einem der vorhergehenden Ansprüche, **dadurch gekennzeichnet, daß** das erste und das zweite Planetengetriebe (6, 10) derart angeordnet sind, daß im zweiten Leistungsbereich der Variator (4) mit dem Hohlrad, der Getriebeeingang (8) mit der Sonne und der Getriebeausgang (9) mit dem Steg des zweiten Planetengetriebes (10) verbunden sind.

7. Stufenlos verstellbares Fahrzeuggetriebe nach einem der vorstehenden Ansprüche, **dadurch gekennzeichnet, daß** die beiden Kupplungen (11, 12) derart schaltbar sind, daß jeweils ein Planetengetriebe (6, 10) mit Leistung beaufschlagbar ist und das jeweils andere Planetengetriebe (10, 6) ohne Leistungsübernahme mitdreht.

8. Stufenlos verstellbares Fahrzeuggetriebe nach Anspruch 7, **dadurch gekennzeichnet, daß** die beiden Kupplungen (11, 12) im mechanischen Leistungszweig (3) parallel zum Variator angeordnet sind.

9. Stufenlos verstellbares Fahrzeuggetriebe nach einem der Ansprüche 1 bis 7, **dadurch gekennzeichnet , daß** die beiden Kupplungen (11, 12) im Leistungszweig (2) des Variators (4) diesem nachgeordnet sind.

10. Stufenlos verstellbares Fahrzeuggetriebe nach einem der vorhergehenden Ansprüche, **dadurch gekennzeichnet, daß** im ersten Leistungsbereich in einer Geared-Neutral-Position des Getriebes (1) das Fahrzeug vorwärts anfahrbar ist.

## Claims

1. Continuously variable vehicle transmission (1) comprising a variator (4) with nonpositive, especially friction-type, power transmission, i.e. a friction gear or a conical-disk continuously variable transmission, and two planetary gears (6, 10) with at least two clutches (11, 12) for shifting the two planetary gears (6, 10), with the transmission input power (P_input) being splittable into at least two power ranges and the first as well as the second power range being power-split, and with the transmission input power in one power range being transmittable via a first power branch (2) from a transmission input (8) via the variator (4) and the first planetary gear (6) and via a second power branch (3) from the transmission input (8) via a mechanical branch past the variator (4) to the first planetary gear (6) and the transmission output (9), **characterized in that** a brake (13) is provided parallel to the two clutches (11, 12) for engagement of a reverse gear.

2. Continuously variable vehicle transmission according to claim 1, **characterized in that** the second planetary gear (10) is provided for power division in both power ranges and that the two power shares in the first or the second planetary gear (6, 10) are added up.

3. Continuously variable vehicle transmission according to claim 1 or 2, **characterized in that** at least one planetary gear (6, 10) in the power flow between transmission input (8) and transmission output (9) is arranged parallel to the variator (4) or is arranged downstream of the variator (4).

4. Continuously variable vehicle transmission according to the claims 1, 2 or 3, **characterized in that** the two planetary gears (6, 10) in the power flow are arranged parallel to each other.

5. Continuously variable vehicle transmission according to the claims 1, 2, 3 or 4, **characterized in that** the first planetary gear and the second planetary gear (6, 10) are arranged in such a way that in the first power range the variator (4) is linked to the sun gear, the transmission input (8) to the planet carrier and the transmission output (9) to the ring gear of the first planetary gear (6).

6. Continuously variable vehicle transmission according to one of the preceding claims, **characterized in that** the first planetary gear and the second planetary gear (6, 10) are arranged in such a way that in the second power range the variator (4) is linked to the ring gear, the transmission input (8) to the sun and the transmission output (9) to the web of the second planetary gear (10).

7. Continuously variable vehicle transmission according to one of the preceding claims, **characterized in that** the two clutches (11, 12) are controllable in such a way that alternately one planetary gear (6, 10) is power-activated while the other planetary gear (10, 6) rotates without power input.

8. Continuously variable vehicle transmission according to claim 7, **characterized in that** the two clutches (11, 12) in the mechanical power branch (3) are arranged parallel to the variator.

9. Continuously variable vehicle transmission according to one of the claims 1 - 7, **characterized in that** the two clutches (11, 12) in the power branch (2) of the variator (4) are arranged downstream of it.

10. Continuously variable vehicle transmission according to one of the preceding claims, **characterized in that** in the first power range the vehicle is forward-startable in a geared-neutral position of the transmission (1).

## Revendications

1. Boîte de vitesses à variation continue d'un véhicule automobile (1) dotée d'un variateur (4) permettant la transmission de la puissance par adhérence, en particulier par un accouplement à friction, par exemple une boîte de vitesses toroïdale ou une transmission à variation continue à disques coniques et deux boîtes épicycloïdales (6, 10) dotées d'au moins deux embrayages (11, 12) pour enclencher les deux boîtes épicycloïdales (6, 10), sachant que la puissance d'entrée de la boîte de vitesses (P_ein) peut être repartie au moins dans deux plages de puissance et sachant qu'il y a, soit dans la première plage de puissance soit dans la deuxième plage de puissance, une répartition de la puissance et sachant que, dans une première plage de puissance, la puissance d'entrée de la boîte de vitesses peut être transmise - par l'intermédiaire d'une première branche de dérivation de la puissance (2) à partir d'une entrée de la boîte de vitesses (8) et à travers le variateur (4) ainsi que la première boîte épicycloïdale (6) vers une sortie de la boîte de vitesses (9) et à travers une deuxième branche de dérivation de la puissance (3) à partir de l'entrée de la boîte de vitesses (8) à travers une branche mécanique et en passant par le variateur (4) - vers la première boîte épicycloïdale (6) et la sortie de la boîte de vitesses (9), **caractérisée en ce que** est prévu, parallèlement aux deux embrayages (11, 12), un frein (13) pour l'engagement d'une marche arrière.

2. Boîte de vitesses à variation continue d'un véhicule automobile selon la revendication 1, **caractérisée en ce que** la deuxième boîte épicycloïdale (10) est prévue pour la répartition de la puissance dans les deux plages de puissance et **en ce que** les deux taux de puissance sont totalisés dans la première ou dans la deuxième boîte épicycloïdale (6, 10).

3. Boîte de vitesses à variation continue d'un véhicule automobile selon une des revendications 1 ou 2, **caractérisée en ce que** au moins une des boîtes épicycloïdales (6, 10) est disposée dans le flux de puissance entre l'entrée de la boîte de vitesses (8) et la sortie de la boîte de vitesses (9), parallèlement au variateur (4), ou **en ce qu'**elle est disposée en aval de celui-ci.

4. Boîte de vitesses à variation continue d'un véhicule automobile selon une des revendications 1, 2 ou 3, **caractérisée en ce que** les deux boîtes épicycloïdales (6; 10) sont disposées dans le flux de puissance de façon parallèle l'une par rapport à l'autre.

5. Boîte de vitesses à variation continue d'un véhicule automobile selon une des revendications 1, 2, 3 ou 4, **caractérisée en ce que** la première et la deuxième boîte épicycloïdale (6, 10) sont disposées de manière à ce que - dans la première branche de dérivation de la puissance - le variateur (4) est lié à la roue solaire, l'entrée de la boîte de vitesses (8) est liée à l'arbre porte-satellites et la sortie de la boîte de vitesses (9) est liée à la couronne de la première boîte épicycloïdale (6).

6. Boîte de vitesses à variation continue d'un véhicule automobile selon une des revendications précédentes, **caractérisée en ce que** la première et la deuxième boîte épicycloïdale (6, 10) sont disposées de manière à ce que - dans la deuxième branche de dérivation de la puissance - le variateur (4) est lié à la couronne, l'entrée de la boîte de vitesses (8) est liée à la roue solaire et la sortie de la boîte de vitesses (9) est liée à la nervure de la deuxième boîte épicycloïdale (10).

7. Boîte de vitesses à variation continue d'un véhicule automobile selon une des revendications précédentes, **caractérisée en ce que** les deux embrayages (11, 12) peuvent être enclenchés de manière à ce que respectivement une des boîtes épicycloïdales (6, 10) peut être alimentée en puissance et l'autre des deux boîtes épicycloïdales (10, 6) tourne sans transmission de puissance.

8. Boîte de vitesses à variation continue d'un véhicule automobile selon la revendication 7, **caractérisée en ce que** les embrayages (11, 12) dans la branche mécanique (3) sont disposés en parallèle par rapport au variateur.

9. Boîte de vitesses à variation continue d'un véhicule automobile selon une des revendications 1 à 7, **caractérisée en ce que** les deux embrayages (11, 12) sont disposés dans la branche de dérivation de la puissance (2) du variateur (4) et **en ce qu'**ils sont disposés en aval de celui-ci.

10. Boîte de vitesses à variation continue d'un véhicule automobile selon une des revendications précédentes, **caractérisée en ce que** dans la première branche de dérivation de la puissance, et en particulier lorsque la boîte de vitesses (1) se trouve dans une position de point mort, le véhicule peut démarrer en marche avant.
